# EUROPEAN PATENT APPLICATION

(11) **EP 1 038 830 A2**
(43) Date of publication of application: **27.09.2000**
(21) Application number: 00201592.3
(22) Date of filing: 06.12.1996
(51) Int. Cl.: B67D 5/08, B67D 5/04

(54) **Intelligent fuelling**

(30) Priority: 08.12.1995 US 9125
(62) Divisional of application: 96941747.6
(71) Applicant: Marconi Commerce Systems Inc., Greensboro, NC 27420-2087 (US)
(72) Inventor: Hartsell, Hal Craig, Kernersville, Forsyth, NC 27284 (US); Payne, Edward Asbell, Greensboro, Guildford, NC 27410 (US)
(74) Representative: Fitchett, Stuart Paul

(57) **Abstract**

The present invention is directed to a fuel dispenser system capable of receiving a signal from a vehicle transponder in order to identify the position of the vehicle relative to a fuelling position. This is particularly advantageously employed where the transponder identifies whether or not the vehicle is fitted with an on-board vapour recovery system. This information can be used to control the dispenser vapour recovery system accordingly.

## Description

The present invention relates generally to fuel dispensers and service stations and, more particularly, to a system to effectively determine a vehicle's position relative to a unique fuelling position and control the fuel dispenser's vapour recovery system depending on the presence of an on-board recovery vapour recovery (ORVR) system on the vehicle.

Recently, ORVR systems have been developed in which the head space in the vehicle fuel tank is vented through a charcoal-filled canister so that the vapour is absorbed by the charcoal. Subsequently, the fuel vapours are withdrawn from the canister into the engine intake manifold for mixture and combustion with the normal fuel and air mixture.

In some areas, fuel dispensers are already required to have vapour recovery systems to remove fuel vapours expelled from the vehicle's fuel fill neck during the in-rush of fuel during the fuelling operation. In addition to vapour recovery systems on fuel dispensers, various environmental regulations will require vapour recovery systems on motor vehicles (ORVRs) in the future. Difficulty arises when an ORVR-equipped vehicle is refuelled at a fuel dispenser having a vapour recovery system. In certain instances, the vacuum created by the respective vapour recovery systems may cause false triggering of the fuel dispenser nozzle's cut-off mechanism, in addition to wasting energy and causing additional wear and tear by redundantly operating two vapour recovery systems. Furthermore, the simultaneous running of opposing vapour recovery systems may adversely affect the vapour recovery performance.

The problem of incompatibility of assisted vapour recovery and ORVR was discussed in "Estimated Hydrocarbon Emissions of Phase II and On-Board Vapour Recovery Systems" dated April 12, 1994, amended May 24, 1994, by the California Air Resources Board (CARB). That paper mentions the possible use of a "smart" interface nozzle to detect an ORVR vehicle and close one vapour intake valve on the nozzle when an ORVR vehicle is being filled.

Adjusting the fuel dispenser's vapour recovery system will mitigate fugitive emissions by reducing underground tank pressure. Reducing underground tank pressure minimizes the "breathing" associated with pressure differentials between the underground tank and ambient pressure levels. If the vacuum created by the fuel dispenser's vapour recovery system is not reduced or shut off, the underground tank pressure will increase to the extent that hydrocarbons are released through a pressure vacuum valve or breathing cap associated with the underground tank. Reducing the vacuum created by the fuel dispenser's vapour recovery system when an ORVR system is detected prevents the ingestion of a volume of excess air into the underground tank. Adjusting the fuel dispenser's vapour recovery system in this manner minimizes breathing losses associated with the underground tank.

Thus, there is a need for a fuel dispensing system with a vapour recovery system having the ability to detect a vehicle having an ORVR system and adjust its vapour recovery system when an ORVR system is detected to reduce breathing losses and wear and tear, as well as conserve energy.

Prior to controlling the fuel dispenser's vapour recovery system, or transferring any other type of information between the vehicle and dispenser, the dispenser must first identify the presence of the vehicle and, in more sophisticated applications, interrogate the vehicle's communication device. This becomes a problem in modern service stations which have multiple-sided fuelling positions associated with each dispenser in addition to having several of these dispensers located in close proximity to one another.

Although various ways are known of communicating with a vehicle during fuelling, the current state-of-the-art has not yet addressed the problem that a modern service station will face when these systems are placed in each of a plurality of closely spaced fuel dispensers. Typically, each dispenser will include a communication system for two fuelling positions associated with that dispenser.

In larger service stations, it will not be uncommon for ten or more intelligent fuelling operations to occur at any one time. Communication links will need to be remote without requiring a physical hard-wired connection. Each fuelling position should be able to communicate with the vehicle at that position without causing interference to or being interfered by other fuelling position and, particularly, from the other fuelling position associated with that fuel dispenser.

The fuel dispensers must determine which dispenser a vehicle is approaching and to what position or side of the dispenser the vehicle will use. The prior art does not address this issue. Although Patent No. 5,072,380 to Randelman et al discloses a means of detecting the direction of a vehicle as it approaches the fuelling area and a means for determining if the vehicle has stopped moving, there is no solution to the problem of distinguishing the side of the fuel dispenser at which the vehicle has stopped. Furthermore, as these systems are gradually implemented in consumer applications, the present inventors have realised that determining the exact location of the vehicle in the service station environment will become more important. Fuelling station for fleet applications have not been faced with the large number of fuelling positions and transactions that a neighbourhood service station will face once intelligent fuelling is implemented.

Thus, there is a further need for a fuel dispenser and system capable of determining the proximity of a vehicle to a fuel station and preferably the exact location of the vehicle relative to a unique fuelling position to eliminate the potential for the erroneous activation of a fuelling position on the wrong side of the dispenser or even a different dispenser altogether.

According to a first aspect of the present invention there is provided a fuel delivery system capable of controlling a fuel dispenser's vapour recovery system based on the presence of an on-board vapour recovery system, a controller capable of controlling the vapour recovery system, a receiver and an antenna operating in conjunction with the receiver to receive a signal emitted from a transponder on a vehicle indicative of the presence of an on-board vapour recovery system. When the controller determines from the transponder signal that an on-board vapour recovery system is present, the controller will control its vapour recovery system accordingly. Such vapour recovery system control may include completely deactivating the system or modifying the system to maximise vapour recovery or reduce underground storage tank breathing losses by controlling the intake of air into the underground storage tank. More sophisticated systems may alert the fuel dispenser when the vehicle's on-board vapour recovery system fails or otherwise malfunctions. In these cases, the vapour recovery system may activate to compensate for the vehicle's vapour recovery system malfunction.

According to a further aspect of the invention there is provided a fuel delivery system comprising a vapour recovery fuel dispenser and means for identifying a vehicle at a fuelling location associated with that dispenser, means for determining whether that vehicle is fitted with an on-board vapour recovery system and means for controlling the vapour recovery of the dispenser in dependence thereon.

The transmitter will typically be a transponder arranged to be interrogated at the fuelling position, and the term "transponder" will be used throughout the rest of the description. Proximity is determined by measuring one or more characteristics of the signal received at a receiver associated with the dispenser, typically an antenna, but this could be an optical, acoustic, or other such receiver. However an "antenna" will be referred to in the rest of this description.

Generally, the strength or magnitude of the signal received at the antenna is the characteristic used to determine vehicle proximity. Multiple directionally sensitive antennas are used to correlate a vehicle with a unique fuelling position.

The dispenser controller is also configurable to monitor the transponder's signal received at various antenna locations throughout the service station environment and triangulate an exact vehicle location. The antennas may be located underground in the dispenser forecourt, within the dispensers, above the dispensers or anywhere convenient within the service station environment. Preferably, each dispenser controller is connected to antennas located in each dispenser and adapted to multiplex the signal received at each antenna to triangulate the vehicle location. Generally, triangulation of the vehicle location is accomplished by measuring the differences in phase of the transponder's signal received at each of the various antennas.

Each of the above-mentioned embodiments, will function using simple one-way communications from the vehicle transponder to the dispenser. Implementing two-way communications allows for information and data transfer between the vehicle and dispenser. This information may include identification of the vehicle fuel type, vehicle operator and fuelling restrictions as well as determining the presence of ORVR equipment. Such communications may be used to prevent vehicle misfuelling, restrict or eliminate unauthorized fuelling of non-vehicular tanks or containers, allow fuelling above the EPA mandated ten gallons per minute fuelling limit while meeting the EPA's fuel spillage requirements, minimize fuelling time and time for payment and eliminate the use of plastic cards and pin numbers. The use of sophisticated information transfer will greatly increase the ability to merchandise customers on an individual basis, taking in consideration their individual purchasing history. Vehicle diagnostic information may be accessed during the fuelling operation in order to communicate such information to the appropriate regulatory agencies or inform the customer of the vehicle's diagnostic status. The dispenser could be configured to download software to correct environmental control problems on a defective motor vehicle and to monitor the vehicle during subsequent fuelling operations to assure that environmental control system defects have been corrected. Furthermore, the fuel dispenser could download various intelligence to the vehicle during fuelling operation, such as local area map and navigation data, among other intelligent vehicle highway system (IVHS) functions.

The fuelling system includes multiple intelligent dispensers having card readers and displays operating under the control of or in conjunction with a central station controller having off-site communication links with point-of-sale networks, customer data bases and regulatory agencies. Accordingly, one aspect of the present invention is to provide a fuel delivery system capable of determining a vehicle's position relative to a unique fuelling position including a fuel dispenser having multiple fuelling positions, a controller associated with the fuel dispenser and a receiver associated with the controller. An antenna is included to receive a signal omitted from a transponder on a vehicle. The controller determines a relative proximity of the vehicle to one of the fuelling positions by measuring a characteristic, such as the strength or magnitude of the transponder signal received at the antenna. As noted above, the transponder and the fuel delivery system may use either one-way or two-way communications at any level of communication sophistication.

In order to determine the proximity to a unique fuelling position, an antenna may be placed at each fuelling position and configured to determine a direction as well as a relative proximity of the vehicle to that fuelling position. Multiple antennas at various locations throughout the service station environment, including within each fuel dispenser, may be used to triangulate an exact vehicle location throughout the service station environment.

These and other aspects of the present invention will become apparent to those skilled in the art after reading the following description of the preferred embodiments when considered with the drawings.

Figure 1 is an elevational and partial sectional view of a typical gasoline dispenser having a vapour recovery system and a vehicle being fuelled thereby.

Figure 2 is an overhead schematic of a service station and dispenser system configured to monitor the proximity of transponder equipped vehicles relative to a particular dispenser and fuelling position.

Figures 3A and 3B are a flow chart for monitoring and determining the proximity of a transponder equipped vehicle relative to a fuel dispenser and fuelling position.

Figure 4 is an overhead schematic of a service station having a dispenser system configured to determine the location of a transponder equipped vehicle within the service station fuelling and retail areas.

Figure 5 is a flow chart for monitoring and determining the location of a transponder equipped vehicle within the service station fuelling and retail areas.

Figure 6 is a flow chart for controlling a dispensers vapour recovery system according to the presence or absence of a vehicle equipped with a transponder and an onboard vapour recovery system.

Figure 7 is a perspective view of a fuel dispenser constructed according to the current invention.

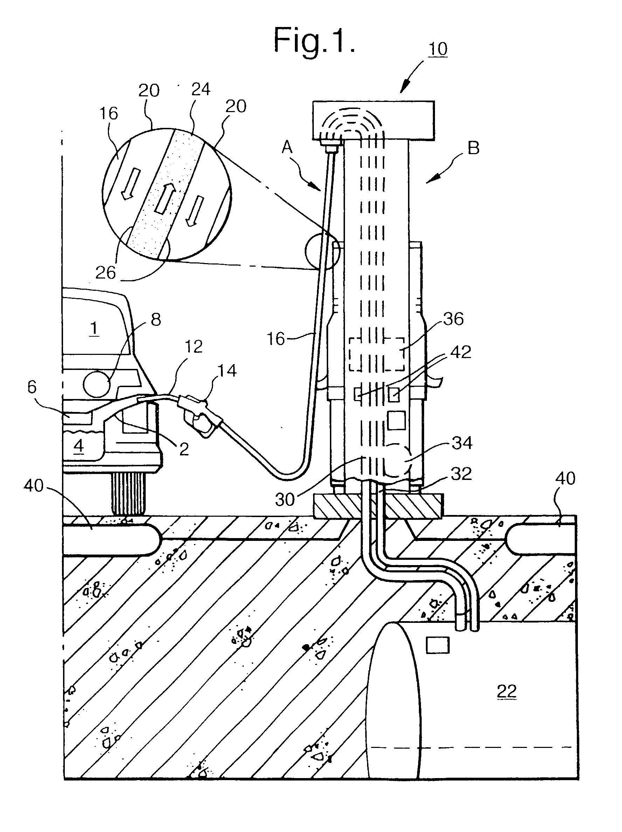

Referring now to the drawings in general, and Figure 1 in particular, it will be understood that the illustrations are for the purpose of describing a preferred embodiment of the invention and are not intended to limit the invention thereto. As best seen in Figure 1, in a typical service station, a vehicle 1 is shown being fuelled from a gasoline dispenser 10. A spout 12 of nozzle 14 is shown inserted into a filler pipe 2 of a fuel tank 4 during the refuelling of the vehicle 1.

A fuel delivery hose 16 having vapour recovery capability is connected at one end to the nozzle 14, and at its other end to the fuel dispenser 10. As shown by the enlarged cutaway view of the interior of the fuel delivery hose 16, an annular fuel delivery passageway 20 is formed within the fuel delivery hose 16 for distributing gasoline pumped from an underground storage tank 22 to the nozzle 14. Also within the fuel delivery hose 16 is a tubular vapour recovery passageway 24 for transferring fuel vapours expelled from the vehicle's fuel tank 4 to the underground storage tank 22 during the fuelling of a vehicle that is not equipped with an onboard vapour recovery system. The fuel delivery hose 16 is depicted as having an internal vapour recovery hose 26 for creating the vapour recovery passage from the spout 12 to the underground storage tank 22. Inside the dispenser 10, fuel is carried to hose 16 by piping 30, and vapour is returned through recovery hose 32.

A vapour recovery pump 34 provides a vacuum in the vapour recovery passage for removing fuel vapour during a refuelling operation. The vapour recovery pump 34 may be placed anywhere along the vapour recovery passage between the nozzle 12 and the underground fuel storage tank 22. The vapour recovery system using the pump 14 may be any suitable system, such as those shown in US Patent Nos. 5,040,577 to Pope, 5,195,564 to Spalding, 5,333,655 to Bergamini et al, or 3,016,928 to Brandt. Various ones of these systems are now in commercial use recovering vapour during refuelling of conventional non-ORVR vehicles. The present invention addresses an adaptation of those systems for use with ORVR vehicles.

As shown in Figure 1, the vehicle 1 is equipped with an ORVR system 6 to minimize the amount of fuel vapour expelled from the filler pipe 2 during fuelling. Additionally, the vehicle 1 includes a transponder 8 for communicating with the dispenser 10. The dispenser 10 will normally include a dispenser controller 36 with a receiver associated with one or more antennas, such as the buried antennas 40 in the forecourt or one more internal antennas 42. The antennas may be placed anywhere within the service station environment, such as on an overhead awning or along the perimeter of the position. Thus, these antenna do not necessarily need to be placed within or near the dispensers 10 in certain embodiments discussed below. Furthermore, "antenna" is used in a most generic sense and include devices capable of picking up numerous types of signals emitted from a vehicle transponder 8, such as electromagnetic, acoustic, infra-red and optic signals.

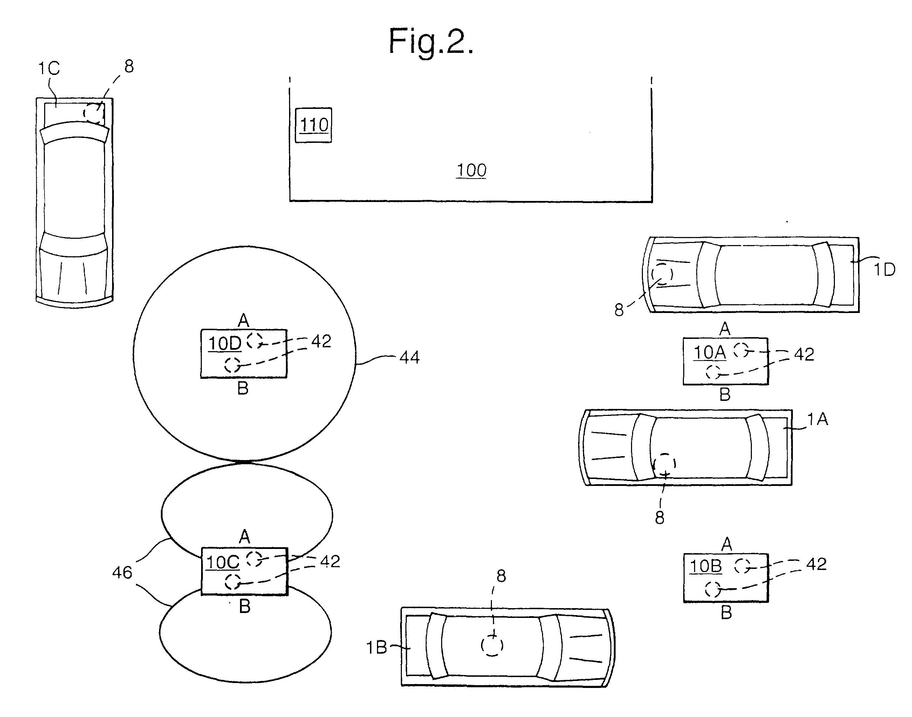

Turning now to Figure 2, a basic service station environment is shown having a station store 100 with a central site controller 110 configured to communicate with each of the dispensers 10A-D. Multiple vehicles 1A-D are also depicted in and around the various fuel dispensers 10A-D. The embodiment of Figure 2 include multiple dispenser antennas 42 mounted within the various dispensers 10A-D. Notably, the central cite controller 110 may be configured to determine the position of the vehicle. In such a configuration the antennas are directly associated with the site controller and the individual dispensers are controlled accordingly by the site controller based on vehicle location.

The antennas 42 and the associated receivers and controllers 36 are adapted to determine the proximity of a vehicle relative to a particular fuelling positions A, B associated with each dispenser 10A-D. Different reception patterns are depicted in association with dispenser 10D and dispenser 10C. A circular reception pattern 44 is shown at dispenser 10D while a dual-lobed pattern 46 is shown associated with dispenser 10C.

The basic circular pattern 44 would be used to determine the proximity of a vehicle 1 with respect to the dispenser 10D. Typically, only one antenna 42 is required for such an embodiment. As a vehicle approaches the dispenser 10D, its corresponding receiver and controller 36 will receive a signal transmitted from the transponder 8. The controller 36 will analyse certain characteristics of the signal, such as magnitude or strength, to determine a relative proximity to the dispenser. The basic circular pattern 44 associated with dispenser 10D generally would not be able to distinguish which side, or fuelling positions A, B, the vehicle 1 is positioned.

The dual-lobed pattern 46 associated with dispenser 10C provides the ability to determine which fuelling position A, B at which the vehicle is located. In order to determine the particular fuelling position A, B, a directional component is necessary in addition to the proximity component described above. To provide this directional component, multiple antennas may be used to create various types of reception lobes or the antennas may be configured to only receive signals from certain preset directions. Regardless of the configuration, the receiver and controller 36 will monitor a characteristic of the signal determinative of proximity, such as magnitude or strength, in conjunction with determining what side of the dispenser A, B, to which the signal appears most proximate. In the dual-lobed embodiment associated with dispenser 10C, the receiver controller 36 could measure the signal characteristics received at both antennas 42 and determine from which antenna the received signal was strongest to determine direction.

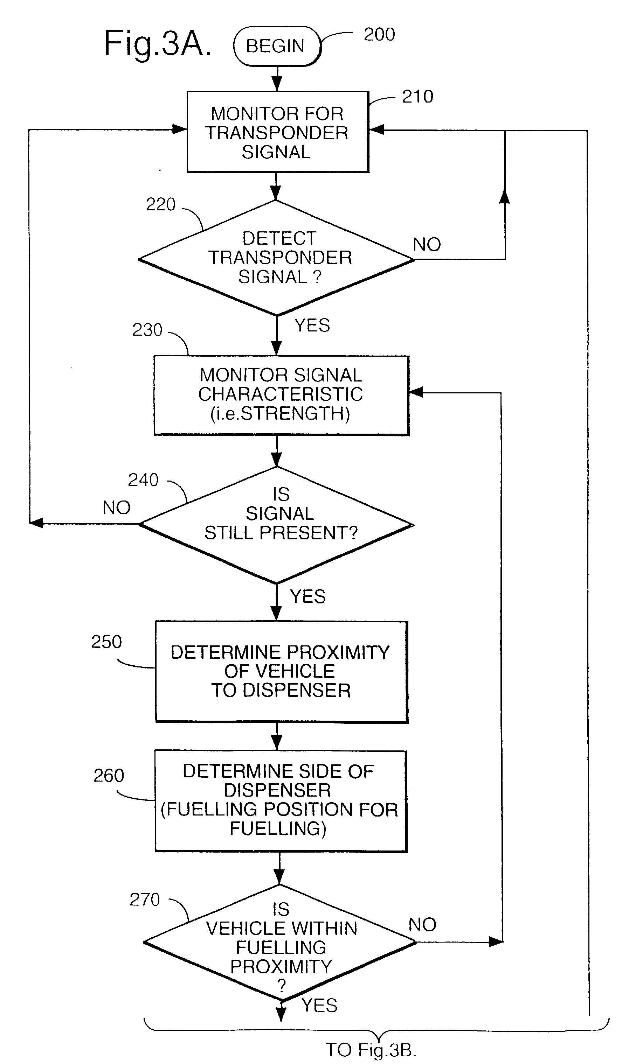

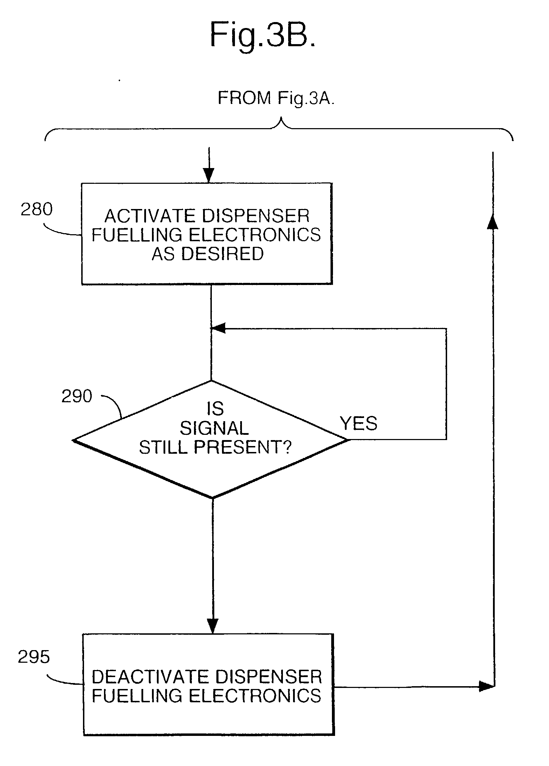

The flow chart of Figures 3A and 3B, outlines the process undertaken by the controller 36 in determining the proximity of a vehicle 1 with respect to a particular fuelling positions A, B for dispenser 10C. The process begins at block 200 wherein the controller 36 begins to monitor for a transponder signal at block 210. Upon detection of a transponder signal at block 220, the controller 36 will monitor a characteristic, such as strength or magnitude of the signal at block 230. At this point, the controller 36 realizes a vehicle 1 is near or approaching the dispenser 10C and continually monitors for the presence of the signal at decision block 240. If the signal is lost, the vehicle has left the reception area and the controller 36 begins to monitor for a new transponder signal at block 210. If the signal remains present, the controller 36 determines the proximity of the vehicle with respect to the dispenser at block 250.

In order to determine the particular fuelling position A, B, the controller 36 must determine to which side of the dispenser 10C the vehicle 1 is at or approaching at block 260. As noted, the controller 36 may simply monitor for signal strength or magnitude received at opposing directionally sensitive antennas 42.

As the vehicle proceeds to a particular fuelling position A, B, the controller 36 determines if the vehicle is within a preset fuelling proximity at decision block 270. When the vehicle is within fuelling proximity, it is in a position close enough to the fuel dispenser 10C and fuelling positions A, B, to allow for fuelling of the vehicle. If the vehicle is not within fuelling proximity, the controller 36 continues to monitor the strength and direction of the signal at blocks 230-260.

Once the vehicle is in position for fuelling, the controller 36 activates the dispenser's fuelling electronics as desired at block 280. During the fuelling operation, the controller 36 continues to monitor for the presence of the signal at decision block 290. When the signal is no longer present, the dispenser electronics are deactivated at block 295 and the controller 36 monitors for the next transponder signal at block 210 wherein the process is repeated.

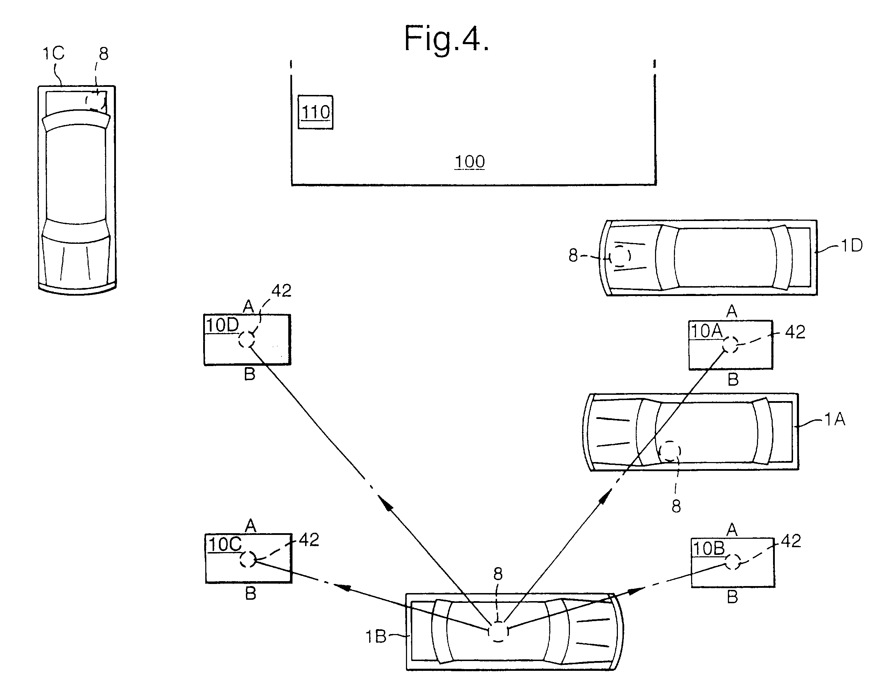

Figure 4 shows an embodiment wherein the location of vehicles 1A through D may be tracked as they travel throughout the service station environment. In this embodiment, each dispenser 10A-D includes one antenna 42 capable of receiving a signal from the transponder of vehicle 1B. Preferably, each of the antennas 42 are multiplexed to each controller 36 associated with each dispenser 10A-D. The various controllers 36 will receive the transponder signal and monitor the location of the vehicle and determine the dispenser 10A-D and fuelling position A, B, at which the vehicle stops. The controllers 36, may, for example, monitor a characteristic, such as the phase shift, of the signal received at the various antennas 42 associated with the dispensers 10A-D and use known triangulation techniques to determine vehicle location.

Although the signal from transponder 8 of vehicle 1B is the only signal depicted, the various dispensers 10A-D may monitor for the presence and location of a plurality of vehicles to determine proximity, direction of travel and location throughout the respective visit.

Triangulation and other similar positioning techniques generally require at least two antennas and provide better resolution as the number of antennas 42 are increased. Furthermore, the position of the antennas 42 may be virtually anywhere. A global positioning system (GPS) may be used to communicate vehicle position to the site controller 110 or the respective fuel dispenser 10.

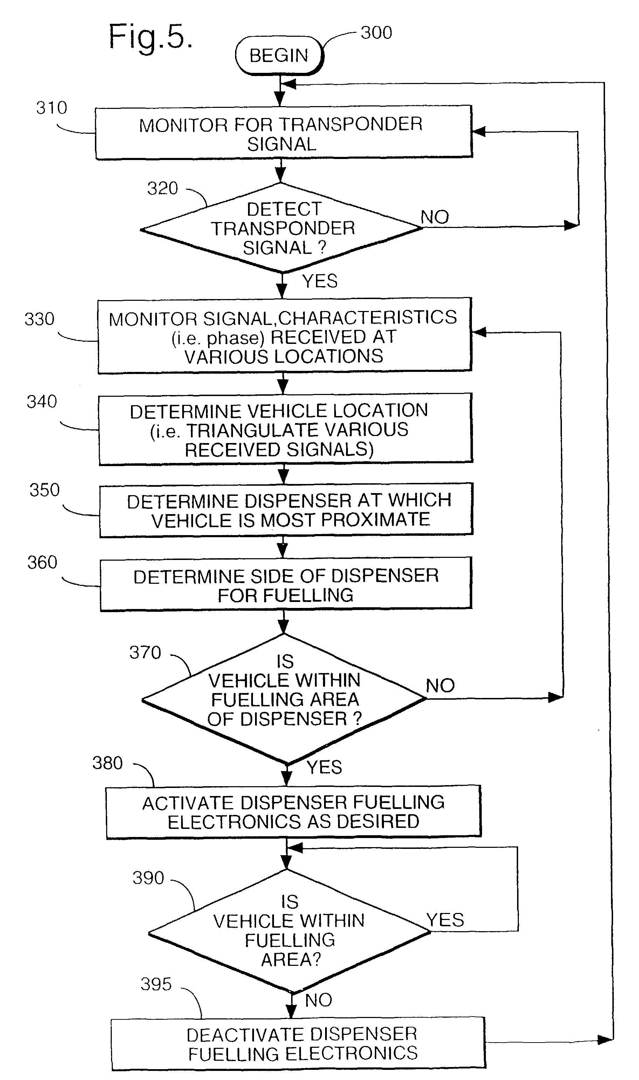

The flow chart of Figure 5 outlines the control process for the embodiment depicted in Figure 4. The process begins at block 300 and initially monitors for the presence of a transponder signal at block 310. Once the signal is received at decision block 320, the controller 36 monitors the characteristics of the signal at the various antennas at block 330. The controller 36 will next determine the location of the vehicle at block 340 using the monitored signal characteristics at the various antennas to triangulate vehicle location. The pump and fuelling position that the fuelling operation will take place is determined at blocks 350 and 360 by determining the location at which the vehicle has stopped. The respective controller 36 will determine if the vehicle is within the fuelling area at decision block 370. If the vehicle is within the fuelling area, the dispenser's fuelling electronics are activated as desired at block 380. The controller 36 will continually monitor the location of the vehicle and determine if the vehicle remains within the fuelling area at decision block 390. Once the fuelling operation is over and the vehicle has left the fuelling area, the controller 36 deactivates the dispensers fuelling electronics at block 395 and returns to block 310 to monitor for a new transponder signal, whereupon the process is repeated.

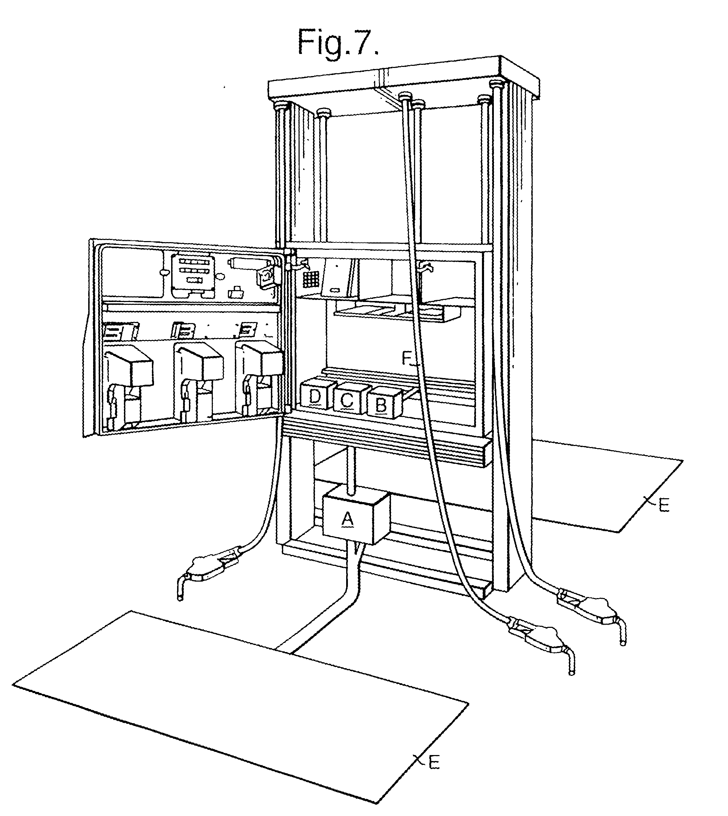

The communications between the transponder 8 and the dispenser 10 may range from a simplistic one-way carrier signal transmitted to the dispenser to a sophisticated two-way communication system where the vehicle 1 and dispenser interact with one another to transmit various types of information to and from the vehicle. Furthermore, the transponder 8 on the vehicle 1 may be active or passive wherein power is derived from another source, such as the transmitting power from the dispenser 10 itself. Figure 7 shows an embodiment of a fuel dispenser constructed according to the present invention.

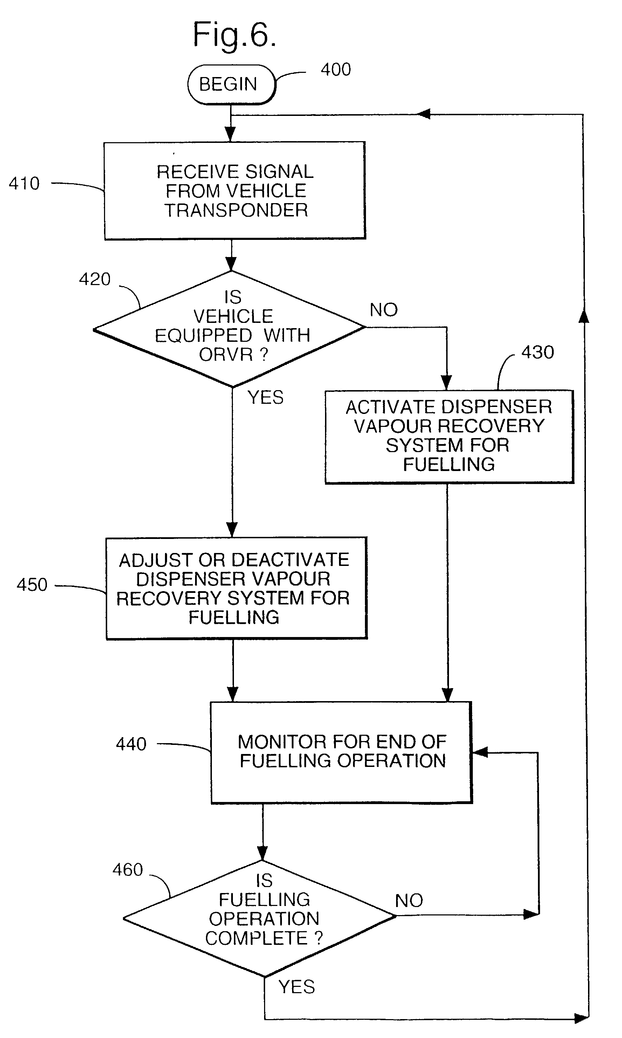

Of particular importance in the current invention, the transponder 8 may be configured to transmit a signal indicative of the presence of an ORVR system. When a dispenser 10 receives a signal indicating the presence of an ORVR system, the vapour recovery system of the dispenser 10 may be shut-off or modified as desired during the subsequent fuelling operation. A simplistic approach incorporates a one-way communication from the transponder 8 to the dispenser 10 to signal the presence of an ORVR system. Notably, this source signal may be used to determine the vehicle's proximity or location relative to the fuelling position. Upon receipt of this signal, the dispenser 10 will deactivate the vapour recovery system during the fuelling operation. A more complex system may incorporate a two-way communication link between the transponder 8 and the dispenser 10 wherein information in addition to that regarding the presence of an ORVR system is included to enable the dispenser to control the vapour recovery system in conjunction with the vehicle's ORVR system to maximize vapour recovery. A basic flow chart of these processes is shown in Figure 6. The process starts at block 400 wherein the controller 36 begins to monitor and receive signals from the vehicle's transponder at block 410. The controller 36 will determine whether the vehicle is equipped with an ORVR system at decision block 420. If the vehicle is not equipped with an ORVR system, the controller 36 will activate the dispensers vapour recovery system for the subsequent fuelling operation at block 430. The controller 36 will monitor for the end of the fuelling operation of block 440 and determine the end of the fuelling operation of block 460. Once the fuelling operation is complete, the process is repeated.

If the transponder tells the controller 36 that the vehicle is equipped with an ORVR system at decision block 420, the vehicle's vapour recovery system is adjusted or deactivated completely during the subsequent fuelling operation at block 450. Preferably, the dispenser'svapour recovery system is simply shut-off when an ORVR equipped vehicle 1 is identified. Even if an ORVR equipped vehicle is detected, it may be desirable to have the dispenser's vapour recovery system operate to supply an amount of air to the storage tank required to replenish the volume of liquid taken from the tank during the fuelling operation to minimize or eliminate tank breathing losses discussed above. In a more complex system, the transponder of the vehicle and dispenser may also communicate information relating to the effectiveness or the presence of a malfunction of the ORVR system. In such cases, the dispenser may further modify or activate the vapour recovery system accordingly to minimize the escape of vapours during the fuelling operation.

In sum, once detection of an ORVR equipped vehicle occurs, various vapour recovery control options are available. Disabling the fuel dispensers vapour recovery system reduces underground fuel tank pressure and thereby reduces loses due to fugitive emissions and reduces wear and unnecessary use of assist-type vapour recovery systems when operation would be redundant. Alternatively, the dispenser's vapour recovery system is adjusted to reduce the vacuum created by the fuel dispenser during the fuelling of an ORVR equipped vehicle. The vapour recovery system may provide enough ambient air to the underground tank, so that when the air saturates, the hydrocarbon saturated air volume is approximately equal to the amount of fuel dispensed, thereby minimizing pressure fluctuations in the underground tanks. Another option, particularly useful with liquid driven vapour pumps, is to use an output of the controller 36 to open a valve to ambient to redirect the air flow of the vapour recovery passage to atmosphere through an ambient tank vent (not shown).

Adjusting the vacuum created by the fuel dispensers vapour recovery system prevents over pressurizing the underground fuel tanks, thus mitigating fugitive emissions. Fugitive emissions is a collective term for emissions leaking to atmosphere at the dispensing facility. The current invention may adjust the fuel dispenser's vapour recovery system to compensate for both vapour shrink and vapour growth conditions. Typically, during vapour shrink conditions, an amount of air greater than the volume of liquid dispensed is drawn into the tank. Vapour shrink conditions usually occur during hot summer months when the ambient temperature is high and the tank temperature is relatively cool. As the air is drawn into the tank, the air contracts. The fuel dispenser compensates for this decrease in volume by increasing the amount of air pulled into the underground tank. In contrast with the vapour shrink conditions, vapour growth conditions typically occur during winter months when the ambient temperature is low and the tank temperature is relatively high. Under vapour growth conditions, the air pulled into the tank expands when subjected to the warmer tank temperatures. The fuel dispenser's vapour recovery system pulls an amount of air less than the amount of fuel dispensed to compensate for the volume expansion in the tank. Alternatively, rough air ingestion compensation may be accomplished by having predefined flow settings for various times of the day or year. For example, the vapour recovery system can be set to ingest air or vapour mixture in an amount equal to two-thirds the volume of the fuel dispensed, thus allowing the air to vapour to expand by a factor of approximately 1.4 or 1.5 to fill the tank volume when saturated.

Various modifications and improvements will occur to those skilled in the art upon reading the foregoing description. It should be understood that all such modifications and improvements have been deleted herein for the sake of conciseness and readability but are properly within the scope of the following claims.

## Claims

1. A fuel delivery system including a vapour recovery fuel dispenser (10) and means for identifying a vehicle (1) at a fuelling location (A,B) associated with that dispenser, characterised in further including means for determining whether that vehicle is fitted with an on-board vapour recovery system (6) and a controller (36) for controlling the vapour recovery of the dispenser (10) in dependance thereon.

2. A system as claimed in Claim 1 wherein the means for identifying a vehicle at a fuelling location and determining whether that vehicle is fitted with an on-board vapour recovery system (6) comprises a receiver (42) operatively associated with said controller (36) to receive data relating to a vehicle from a data conveying signal emitted from a transmitter (8) on the vehicle (1).

3. A delivery system as claimed in Claim 2 wherein said controller is configured to turn off said dispenser vapour recovery system (24, 32, 34) when the signal emitted from the transmitter indicates the presence of a vehicle vapour recovery system on the vehicle.

4. A system as claimed in Claim 3 wherein said vapour recovery system (24, 32, 34) resumes substantial vapour recovery if the signal emitted from the transmitter indicates a malfunction of the vapour recovery system of the vehicle.

5. A system as claimed in any one of Claims 2 to 4 wherein said vehicle transmitter (8) is passive.

6. A system as claimed in Claim 5 further including a transmitter operatively associated with said controller and adapted to transmit signals from said controller to said transmitter wherein said passive transmitter derives power from transmitted signals from said transmitter.

7. A system as claimed in any one of Claims 2 to 6 where the or each receiver is an antenna.

8. A system as claimed in any one of Claims 2 to 7 wherein the vehicle transmitter is a transponder and the system is arranged to transmit an interrogation signal to the transponder.

9. A system as claimed in any preceding wherein said vapour recovery system is adjusted by said controller in a manner to assist vapour recovery during the fuelling operation upon the determination of the presence of a vehicle vapour recovery system on the vehicle, whereby the respective vapour recovery systems operate in conjunction to maximise fuel vapour recovery.

10. A system as claimed in any preceding claim wherein said controller is adapted to adjust said vapour recovery system to pull in an amount of air or hydrocarbon vapour mixture to reduce breathing losses.

11. A system as claimed in any preceding claim further comprising a transmitter operatively associated with said controller and said receiver for transmitting signals to the transmitter to facilitate bi-directional communications between the vehicle and said dispenser.

12. A system as claimed in any preceding claim comprising a plurality of directionally sensitive receivers and wherein said controller is adapted to determine when the vehicle is at one of said multiple fuelling positions by determining a direction and proximity of the vehicle to said dispenser.

13. A system as claimed in any preceding claim comprising:
a fuel dispenser having multiple fuelling positions (10A to 10D);
a receiver to receive data relating to a vehicle from a data conveying signal emitted from a transmitter on a vehicle;
said controller adapted to determine the fuelling position the vehicle is at from a characterised of the data conveying signal.

14. A system as claimed in Claim 13 further including at least one receiver associated with each fuel delivery position in order to determine the proximity of the vehicle (1) to a particular fuelling position of said dispenser (10).

15. A system as claimed in Claim 13 or 14 including at least two receivers wherein said controller is adapted to determine a fuelling position of the vehicle by measuring a characteristic of the signal emitted from the transmitter received at each said receiver.

16. The fuel delivery system of claim 15 wherein said controller triangulates the vehicle location using the signal emitted from the transmitter received at each receiver.

17. A system as claimed in Claim 15 or 16 wherein said controller measures the phase of the signal from the transmitter at each receiver to determine the vehicle location.

18. The system as claimed in any one of Claims 13 to 17 wherein said controller measures the magnitude or strength of the signal from the transmitter.
